# EUROPEAN PATENT APPLICATION

(11) **EP 3 011 817 A1**
(43) Date of publication of application: **27.04.2016**
(21) Application number: 15190989.2
(22) Date of filing: 22.10.2015
(51) Int. Cl.: A01C 11/02

(54) **DEVICE AND METHOD FOR TRANSPLANTING PLANTS**

(30) Priority: 24.10.2014 SE 1451275
(71) Applicant: Bracke Forest AB, 840 60 Bräcke (SE)
(72) Inventor: ANDERSSON, Sören, 880 51 Rossön (SE)
(74) Representative: Ehrner & Delmar Patentbyrå AB

(57) **Abstract**

A device (1) for transplanting plants (P) including a plant carrier (6,7,8,9) having a plurality of cells (C) for plants with root plugs arranged in parallel rows, an extraction arrangement for successively extracting the plants (P) from the cells (C), and a planting tool (5) for subsequent planting the extracted plants. The extraction arrangement includes a bottom support structure for covering cell bottoms and for supporting each root plug, and the bottom support structure includes a first plate (10) and a second plate (11) which are movable relative to each other and to the plant carrier (6,7,8,9) to successively open the bottom of the cells (C) thereby allowing the plants (P) to be extracted downwards, one by one, root plug first, towards the planting tool (5).

## Description

### FIELD OF THE INVENTION

The invention relates to a device for transplanting plants including: i) a plant carrier having a plurality of cells for plants with root plugs arranged in parallel rows, ii) a positioning device for positioning the plant carrier in an extraction station, iii) an extraction arrangement in the extraction station for successively extracting the plants from the cells, and iv) a planting tool for subsequent planting the extracted plants. The invention also relates to a corresponding method.

### BACKGROUND OF THE INVENTION

A planter for plugged plants is previously known and marketed by the applicant under the name "Bracke P11.a". This planter is intended to be attached to a so called harvester, a crane, an excavator or the backhoe of a tractor.

The plants to be planted are received in individual cells being part of a circular magazine of the Bracke P11.a. The magazine is of the carousel type and is rotatable inside an upwards open cover. During operation, the carousel magazine is rotated intermittently to open the cell bottoms one by one so as to allow the plugged plants to escape downwards through an extraction opening into a planting tube and subsequently to the planting tool.

The magazine is loaded manually by an operator filling the cells with the plugged plants.

The Bracke P11.a works well but there are requirements for increased capacity, productivity and simplification of devices according to the background art.

As a further example of the background art can be mentioned EP 0 457 906 A1.

### AIM AND MOST IMPORTANT FEATURES OF THE INVENTION

It is an aim of the present invention to address the problems of the background art and to provide a device wherein these problems are addressed and at least reduced.

These aims are obtained in respect of a device according to the above in that the extraction arrangement includes a bottom support structure for covering cell bottoms and for supporting each root plug, and that the bottom support structure includes a first plate and a second plate which are movable relative to each other and to the plant carrier to successively open the bottom of the cells for allowing plants to be extracted downward, one by one, root plug first, towards the planting tool.

The basic idea is thus to place a number of plants having each a root in a root plug in a set of cells being open upwards as well as downwards.

The loaded cells are covered at their bottom by displaceable plates which are stepwise moved aside in order to open the bottoms of the cells one by one and to release one plant at a time to subsequently enter a planting tool for planting the extracted plant.

The displaceable plates can be arranged in various ways and typically the two plates are able to uncover the bottoms of the cells successively by being displaceable in orthogonal directions. The first plate is hereby positioned in top of the second plate.

The first of the plates will first be moved to uncover bottoms of one row of cells at a time. All the plants in that row will then drop down so as to be resting on the second plate. The second of the plates will thereupon be moved to open the cells in that row one by one so that the plants can be extracted from the cells by gravity. When the second plate has been moved so as to open all cells, it is brought back to the initial position below all cells. Thereupon the first plate uncovers the next row of cells which are thereupon emptied according to the above by successive movement of the second plate. The procedure is continued until the plant carrier is completely emptied.

The cells can be arranged in different manners, for example as a honeycomb pattern cells, as square cells or in any other way. Square cells are preferred i.a. for ease of production.

The advantages compared to the background art are several. The root plugs are protected from wear and thereby the roots are in better condition compared to the situation with the background art. The capacity is increased and possibilities are afforded to arrange loading of the cells more effectively.

The first plate and the second plate can be arranged to be movable in directions forming an angle relative to each other, said angle being chosen according to i.a. the form of the cells or the arrangement and positioning of plate movement actuators.

It is preferred that the first plate and the second plate are movable in perpendicular directions relative to each other since this allows an easy and logical construction.

It is also preferred that a funnel element is arranged in the extraction station, said funnel element being arranged over the planting tool so as to lead an extracted plant to the planting tool, In particular via a planting tube, and in particular that the funnel element covers the entire area of the plant carrier in the extraction station. This makes it unnecessary to move either the plant carrier or the funnel element during the extraction phase.

In particular it is advantageous that the first plate is movable in directions that are parallel to the first cell rows of the plant carrier and that the second plate is movable in directions that are parallel to the second cell rows of the plant carrier. This way it is easily accomplished to move the plates so as to open one cell bottom at a time.

Advantageously the first and second plates are driven by an actuator from the group: a screw thread and nut actuator, a fluid actuator, a chain drive actuator or a band drive actuator. Such actuators are easily controlled and can be constructed resilient and with long working life.

It is also preferred that the first and second plates are slidably supported on support guides in order to provide safe and stable support.

The invention also relates to a method for transplanting plants including the steps: i) positioning a plant carrier having a plurality of cells for plants with root plugs arranged in parallel rows in an extraction station, ii) successively extracting the plants from the cells, iii) subsequent planting the extracted plants. The method includes positioning the plant carrier on a bottom support structure being comprised by a first plate and a second plate for covering cell bottoms and for supporting each root plug, and moving the first plate and the second plate relative to each other and to the plant carrier to successively open the bottom of the cells for allowing plants to be extracted downward, one by one, root plug first, towards the planting tool. The advantages corresponding to the inventive device are afforded according to the inventive method.

It is preferred that the first plate and the second plate are moved in perpendicular directions relative to each other.

Suitably, plants being extracted are caught by a funnel element, said funnel element leading the plant to the planting tool.

The first plate is advantageously moved in directions that are parallel to first cell rows of the plant carrier.

The second plate is advantageously moved in directions that are parallel to second cell rows of the plant carrier.

Further details and advantages of the invention will be explained below.

### BRIEF DESCRIPTION OF DRAWINGS

The invention will now be described in greater detail at the background of the drawings, wherein:
Fig. 1 shows in a side view a device for transplanting tree plants,
Fig. 2 shows the device in Fig. 1 in a view from above,
Fig. 3 shows an explanatory detail of the device in Figs. 1 and 2 for explanatory purposes,
Fig. 4 shows a plant carrier in the process of being emptied,
Fig. 5 shows one variant of a plant carrier in a perspective view,
Fig. 6 shows an alternative variant of a plant carrier,
   and
Fig. 7 shows a diagram illustrating a method sequence according to the invention.

### DESCRIPTION OF EMBODIMENTS

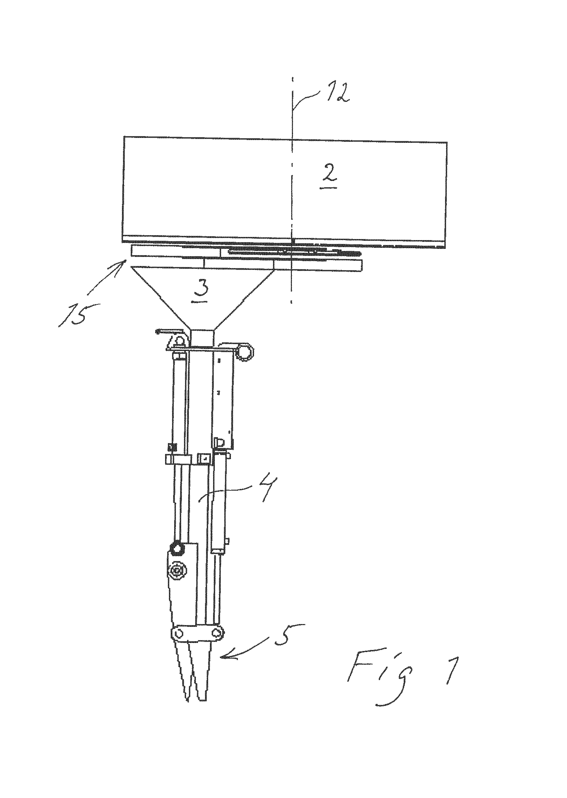

The device 1 for transplanting tree plants shown in Fig. 1 (a planter) is intended to be connected to and supported by a so called harvester, a crane, an excavator, the backhoe of a tractor or the like. The device 1 includes a magazine housing 2 which encloses a number of plant carriers, each one supporting a number of tree plants with root plugs.

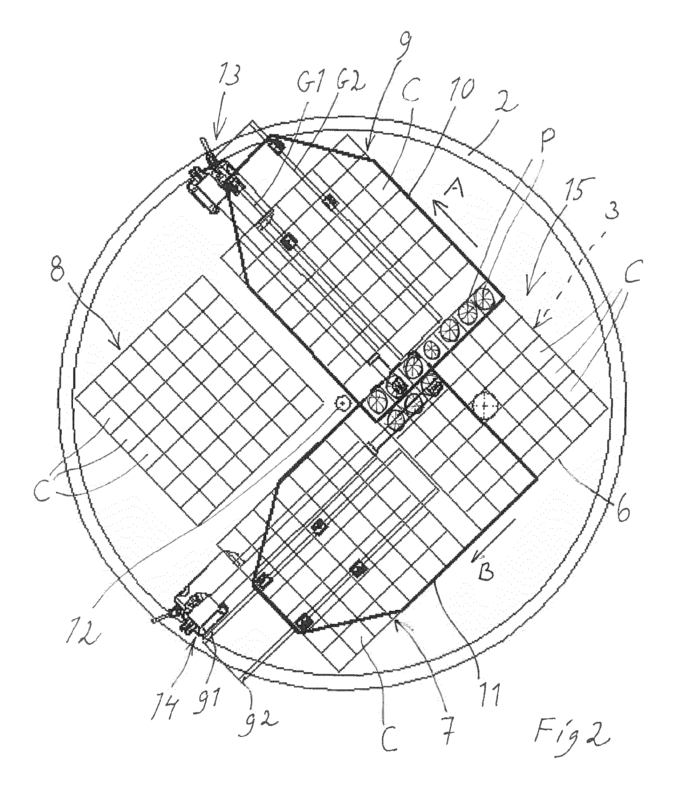

A funnel element 3 is arranged below the magazine housing 2 so as to completely cover an extraction station 15 wherein tree plants from a first plant carrier (6 in Fig. 2) tree plants are released and are allowed to fall down. The falling tree plants are guided by the funnel element into a planting tube 4 for further transport by gravitation to a planting tool 5.

The planting tool is operated in a per se known manner and is arranged to form a hole for the plant, into which the root plug is placed.

Fig. 2 shows the device for transplanting tree plants seen from above, whereby are illustrated a first plant carrier 6, a second plant carrier 7, a third plant carrier 8 and a fourth plant carrier 9. The first - fourth plant carriers 6 - 9 are placed in a structure or a positioning device to be rotatable around a rotation axis 12 to position the plant carriers one by one in the extraction station 15 above the funnel element 3 as shown in Fig. 1.

Each plant carrier provides a plurality of plant cells C which are arranged in a number of parallel rows, each row including a plurality of (here illustrated with seven) cells. In the shown example, seven rows are arranged in parallel to each other, whereby therefore each plant carrier includes 49 cells C. It should be noted that other numbers of cells could be included in the plant carrier, also with different number of cells in the different directions.

When a plant carrier has been rotated around the rotational axis 12 so as to be positioned in the extraction station 15 by said positioning device which is preferably an indexing device, it will be emptied by allowing the tree plants one by one to fall into the funnel element 3 and to be subsequently guided to the planting tool (5 in Fig. 1).

For that purpose there are arranged a set of a first plate 10 and a second plate 11 together forming a bottom support for the cells C. The plates 10 and 11 are moveable to uncover the bottom of one cell at the time to allow a plant with a root plug received in that cell to fall down into the funnel element by gravity.

This is accomplished by having, in an initial position, the first plate 10 and the second plate 11 being in a position where they both cover the entire extraction station 15 and thereby bottom of the first plant carrier 6 when it is in the extraction station 15.

Thereupon the first plate 10 moves in the direction of arrow A so as to uncover one row of cells C when the second plate 11 still completely covers the bottom of the first plant carrier 6. Next, the second plate 11 is moved in the direction of arrow B so as to open and uncover the bottom of a first cell C in the row uncovered by the first plate 10 for releasing the plant in that cell to allow it to be guided to the planting tool and to be planted.

Next, the second plate 11 moves again in the direction of arrow B so as to uncover the second cell C thereby allowing the second plant to fall down and subsequently be planted. This procedure continuous until the first row of cells C is emptied.

Thereupon the second plate is returned to the initial position by being moved opposite to arrow B to cover the entire bottom of the first plant carrier 6.

Now the first plate 10 is once again moved in the direction of arrow A so as to uncover the second row of cells C which is emptied by moving the second plate 11 in the direction of arrow B in the same way as is described above in respect of the first row.

The process is repeated until all the cells C in the first plant carrier are emptied. Thereupon the set of plant carriers 6, 7, 8, 9, is rotated one quarter of a revolution around the rotational axis 12 whereby the second plate 11 will be positioned in the extraction station.

The second plant carrier 7 is thereupon emptied in the same way as the first plant carrier whereupon the set of plant carriers is again rotated in order to empty the third plant carrier and thereupon again rotated so as to empty the fourth plant carrier 9.

The first plate 10 is actuated by a first plate movement actuator 13 which in the shown example is in the form of a rotational motor which rotates a screw threaded rod, in turn co-operating with a nut (not shown) being fixed to the first plate 10. The first plate 10 is guided on guides G1 and G2 which could for example be slide beams supporting slides being fixed to the first plate 10.

The second plate 11 is actuated in the same way by a second plate movement actuator 14, which works in the same way as the first plate movement actuator 13. The second plate 11 is supported on guides g1 and g2 in the same way as the first plate 10.

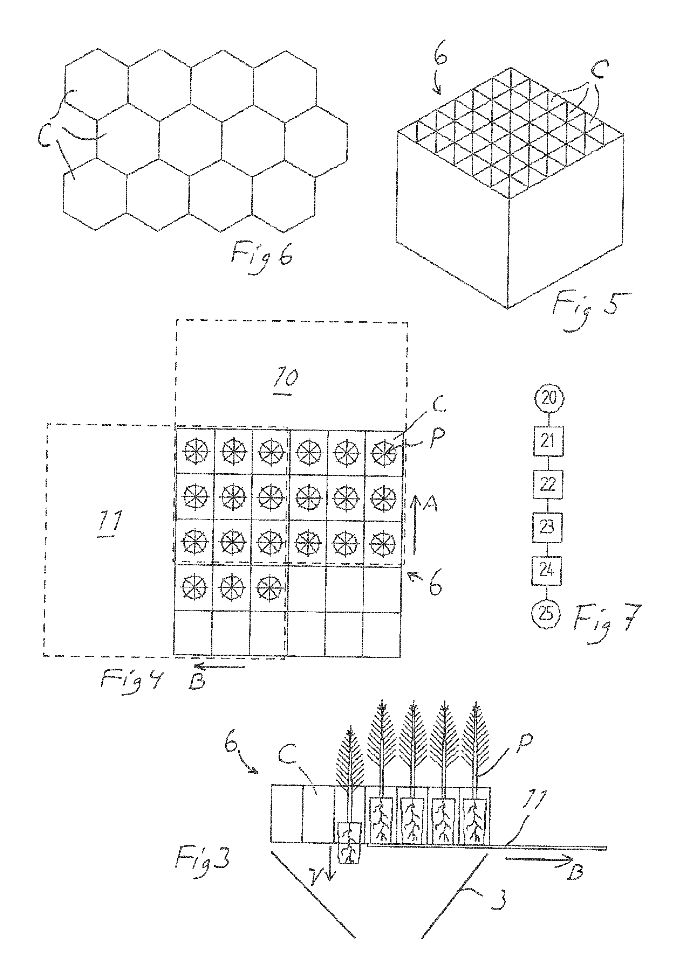

Fig. 3 shows in more detail seven cells C each one for receiving one plant P having each one a root plug and the second plate 11 which just has been moved in the direction of arrow B in order to open one of the cells so as to allow a plant P to fall down in the direction of arrow V into the funnel 3 in order to be subsequently guided to the planting tool.

Fig. 4 illustrates, more isolated, a plant carrier 6 with a plurality of (here illustrated with 5x6 = 30) cells C and the first and the second plates 10 and 11. Nine cells have been opened, six in the first and three in the second, and emptied whereas each one of the remaining cells still contains a plant P.

Fig. 5 shows in a perspective view a plant carrier including 6x6 = 36 cells C for tree plants.

Fig. 6 shows a detail of a plant carrier with alternatively formed cells C with hexagonal section so as to form a honeycomb cell pattern.

The invention can be modified within the scope of the annexed claims. It is possible to arrange the device for transplanting trees without the carousel construction even if this is highly preferred because of the capacity afforded. Besides screw thread and nut actuator the plates can be actuated otherwise by per se known means such as a fluid actuator, a chain drive actuator or a band drive actuator.

The number of plant carriers can me more or less than four.

Fig 7 shows a diagram illustrating a method sequence according to the invention.

Position 20 shows the start of the sequence and positioning a plant carrier having a plurality of cells for tree plants with root plugs in an extraction station on a bottom support structure being comprised by a first plate and a second plate for covering cell bottoms and for supporting each root plug.

Position 21 shows moving the first plate to uncover a row of cells.

Position 22 shows moving the second plate to successively open the bottom of individual cells in the row of cells uncovered in position 21.

Position 23 indicates allowing tree plants to be extracted downward, one by one, root plug first, towards the planting tool.

Position 24 indicates planting the extracted plant with the planting tool.

Position 25 shows the end of the sequence.

The sequence is repeated as often as necessary. The sequence can be supplemented with additional steps when required.

The invention has been described at the background of tree plants but it is also applicable for other plants or seedlings such as suitable kinds of vegetable plants.

The inventions has been described at the background of a planting machine mounted on a crane or the like but it is also applicable for other types of mounting arrangements such as a continuously advancing planting machine.

## Claims

1. Device (1) for transplanting plants (P) including:
i) a plant carrier (6,7,8,9) having a plurality of cells (C) for plants with root plugs arranged in parallel rows,
ii) a positioning device for positioning the plant carrier (6,7,8,9) in an extraction station (15),
iii) an extraction arrangement in the extraction station for successively extracting the plants (P) from the cells (C), and
iv) a planting tool (5) for subsequent planting the extracted plants,
**characterized in**
- **that** the extraction arrangement includes a bottom support structure for covering cell bottoms and for supporting each root plug, and
- **that** the bottom support structure includes a first plate (10) and a second plate (11) which are movable relative to each other and to the plant carrier (6,7,8,9) to successively open the bottom of the cells (C) thereby allowing the plants (P) to be extracted downwards, one by one, root plug first, towards the planting tool (5).

2. Device according to claim 1, **characterized in that** the first plate (10) and the second plate (11) are movable in perpendicular directions relative to each other.

3. Device according to claim 1 or 2, **characterized in that** a funnel element (3) is arranged in the extraction station (15), said funnel element being arranged to lead to the planting tool (5).

4. Device according to claim 3, **characterized in that** the funnel element (5) covers the entire area of the plant carrier in the extraction station (15).

5. Device according to any one of claims 1 - 4, **characterized in that** the first plate (10) is movable in directions that are parallel to first cell rows of the plant carrier (6).

6. Device according to any one of claims 1 - 5, **characterized in that** the second plate (11) is movable in directions that are parallel to second cell rows of the plant carrier (6).

7. Device according to any one of claims 1 - 6, **characterized in that** the first and second plates (10,11) are driven by an actuator (13,14) from the group: a screw thread and nut actuator, a fluid actuator, a chain drive actuator or a band drive actuator.

8. Device according to any one of claims 1 - 7, **characterized in that** the first and second plates (10,11) are slidably supported on support guides (G1,G2,g1,g2).

9. Method for transplanting plants including the steps:
i) positioning a plant carrier (6,7,8,9) having a plurality of cells (C) for plants (P) with root plugs arranged in parallel rows in an extraction station (15),
ii) successively extracting the plants (P) from the cells,
iii) subsequent planting the extracted plants (P),
**characterized by**
- positioning the plant carrier (6,7,8,9) on a bottom support structure being comprised by a first plate (10) and a second plate (11) for covering cell bottoms and for supporting each root plug, and
- moving the first plate (10) and the second plate (11) relative to each other and to the plant carrier to successively open the bottom of the cells (C) thereby allowing the plants (P) to be extracted downward, one by one, root plug first, towards the planting tool (5).

10. Method according to claim 9, **characterized in that** the first plate (10) and the second plate (11) are moved in perpendicular directions relative to each other.

11. Method according to claim 9 or 10, **characterized in** plants (P) being extracted are caught by a funnel element (3), said funnel element being arranged to lead to the planting tool (5).

12. Method according to any one of claims 9 - 11, **characterized in that** the first plate (10) is moved in directions that are parallel to first cell rows of the plant carrier.

13. Method according to any one of claims 9 - 12, **characterized in that** the second plate (11) is moved in directions that are parallel to second cell rows of the plant carrier.
